# FASCICULE DE BREVET EUROPEEN

(11) **EP 1 022 793 B1**
(45) Date de publication et mention de la délivrance du brevet: **08.08.2007**
(21) Numéro de dépôt: 99403260.5
(22) Date de dépôt: 23.12.1999
(51) Int. Cl.: H01M 4/62, H01M 4/52, H01M 4/32

(54) **Electrode au nickel non frittée pour générateur électrochimique secondaire à électrolyte alcalin**
Nichtgesinterte Nickelelektrode für Sekundärbatterie mit alkalischem Elektrolyt
Non-sintered nickel electrode for secondary battery with alkali electrolyte

(30) Priorité: 21.01.1999 FR 9900618
(43) Date de publication de la demande: 26.07.2000
(73) Titulaire: Saft Finance S.à.r.l., 1471 Luxembourg (LU)
(72) Inventeur: Bernard, Patrick, 33000 Bordeaux (FR); Baudry, Michelle, 33700 Merignac (FR); Jan, Olivier, 33000 Bordeaux (FR); Audry, Claudette, 33520 Bruges (FR)
(74) Mandataire: Pochart, François

(56) Documents cités:
- EP-A- 0 866 510
- US-A- 5 672 447
- PATENT ABSTRACTS OF JAPAN vol. 1999, no. 03, 31 mars 1999 (1999-03-31) & JP 10 326616 A (MATSUSHITA ELECTRIC IND CO LTD), 8 décembre 1998 (1998-12-08)

## Description

La présente invention concerne une électrode au nickel non-frittée utilisée notamment comme électrode positive dans un générateur électrochimique secondaire à électrolyte alcalin, comme par exemple les accumulateurs nickel-cadmium, nickel-fer, nickel-hydrogène, nickel-métal hydrurable et le générateur la contenant. Elle s'étend en outre à un procédé de préparation de cette électrode.

Il existe plusieurs types d'électrodes susceptibles d'être utilisées dans un accumulateur à électrolyte alcalin, comme les électrodes frittées et les électrodes non-frittées, dites aussi empâtées ou plastifiées. Par rapport aux autres types d'électrodes, une électrode non-frittée contient une plus grande quantité de matière, sa capacité volumique est donc augmentée, et son coût de fabrication est plus faible.

Une électrode au nickel non-frittée se compose d'un support servant de collecteur de courant sur lequel on enduit une pâte contenant la matière active et un liant, à laquelle on ajoute le plus souvent un matériau conducteur. Ledit support est un support conducteur tridimensionnel poreux comme un feutre ou une mousse à base de métal ou de carbone ; il peut être aussi un support conducteur bidimensionnel comme un métal déployé, une grille, un tissu ou un feuillard plein ou perforé. Lors de la fabrication de l'électrode, un solvant volatil est ajouté à la pâte pour ajuster sa viscosité afin de faciliter la mise en forme. Une fois la pâte déposée sur ou dans le support, l'ensemble est comprimé et séché pour obtenir une électrode de la densité et de l'épaisseur souhaitée.

Dans une électrode de nickel non-frittée, la matière active est constituée d'un hydroxyde à base de nickel. L'hydroxyde de nickel est un composé peu conducteur qui nécessite l'adjonction dans l'électrode d'un matériau permettant une bonne percolation électrique. La pâte contient donc généralement un matériau conducteur qui peut être par exemple un composé du cobalt tel que du cobalt métallique Co, un hydroxyde de cobalt Co(OH)₂ et/ou un oxyde de cobalt CoO. Lors de la première charge de l'accumulateur alcalin, ces composés sont oxydés en oxyhydroxyde de cobalt CoOOH dans lequel le cobalt est porté au degré d'oxydation supérieur ou égal à +3. Cet oxyhydroxyde de cobalt est stable dans le domaine normal de fonctionnement de l'électrode positive au nickel et insoluble dans l'électrolyte alcalin. Il assure la percolation électrique de l'électrode.

Stocké à l'état complètement déchargé, un accumulateur alcalin possédant une électrode positive au nickel non-frittée voit sa tension décroître avec le temps. Lorsque la durée du stockage dépasse quelques mois, sa tension tend vers 0V. Dans ces conditions, l'oxyhydroxyde de cobalt se réduit lentement. Le cobalt est porté d'abord au degré d'oxydation +2,66 dans Co₃O₄, puis il atteint le degré d'oxydation +2 dans Co(OH)₂.
Or l'hydroxyde de cobalt Co(OH)₂ est un composé très soluble dans l'électrolyte. Par conséquent, on observe après une période de stockage de plusieurs mois, une perte de la conductivité due à la dissolution partielle du réseau percolant de l'électrode non-frittée. Il en résulte une perte irréversible de capacité qui peut dépasser 15%. Cette perte irréversible de capacité se produit quel que soit le composé de cobalt actuellement introduit dans la pâte.

La demande de brevet européen EP-A-798 801 et le brevet US 5.672.447 proposent d'utiliser une poudre d'hydroxyde de nickel recouverte par un composé du cobalt désordonné de valence supérieure à +2. La demande de brevet européen EP-A-0 789 408 précise qu'un tel composé de cobalt contient entre 0,1 et 10 % en poids de sodium. De tels revêtements ne sont pas stables non plus lors d'un stockage à bas potentiel.

La présente invention a pour but de proposer une électrode au nickel non-frittée dont la perte irréversible de capacité en stockage est fortement réduite par rapport aux électrodes actuellement connues.

L'objet de la présente invention est une électrode au nickel non-frittée pour générateur électrochimique à électrolyte alcalin comportant un collecteur de courant et une pâte contenant au moins une matière active à base d'hydroxyde de nickel et un matériau conducteur, caractérisée par le fait que ledit matériau conducteur est un oxyde lithié de cobalt et de nickel dont le degré d'oxydation obtenu après la formation électrochimique est stable après un stockage pendant six mois à température ambiante dans l'électrolyte alcalin.

La vitesse de réduction de l'oxyde lithié selon l'invention est beaucoup plus lente que celle d'un composé standard de l'état de la technique ayant après formation électrochimique un degré d'oxydation +3. Par conséquent, à durée de stockage équivalente, la perte irréversible de capacité est très fortement réduite par rapport à celle observée dans les générateurs électrochimiques antérieurs.

Afin que l'électrode positive ait un taux d'utilisation optimal, la conductivité dudit matériau conducteur après la formation électrochimique est supérieure à 10⁻² Siemens.cm⁻¹.

Selon un mode de réalisation préférentiel, ledit oxyde lithié répond à la formule LiₓNi_{y}Co_{1.y}O₂ avec x compris entre 0.1 et 1 et y compris entre 0.02 et 0.9.

Dans une première variante, ledit oxyde lithié est sous forme de poudre mélangée à la poudre d'hydroxyde de nickel avec une granulométrie moyenne dudit oxyde lithié inférieure à 0.7 µm, et de préférence inférieure à 0.5 µm; la quantité dudit oxyde lithié est préférentiellement comprise entre 6 à 12 % en poids par rapport à ladite matière active.

Dans une seconde variante, ledit oxyde lithié recouvre les grains d'hydroxyde de nickel ; la quantité dudit oxyde lithié est alors préférentiellement comprise entre 3 à 9 % en poids par rapport à ladite matière active.

Dans une troisième variante, ledit oxyde lithié est à la fois sous forme de poudre mélangée à la poudre d'hydroxyde de nickel et sous forme de revêtement des grains d'hydroxyde de nickel.

Selon un autre mode de réalisation, ledit oxyde lithié répond à la formule LiₓNa_{z}Ni_{y}Co_{1-y}O₂ avec x + z compris entre 0.1 et 1 et z compris entre 0 et 0.5.

Dans tout ce qui précède, on entend par hydroxyde de nickel, un hydroxyde contenant principalement du nickel mais aussi au moins un hydroxyde syncristallisé d'un élément choisi parmi le zinc, le cadmium, le magnésium et l'aluminium ; il peut contenir également au moins un hydroxyde syncristallisé d'un élément choisi parmi le cobalt, le manganèse, l'yttrium, le calcium et le zirconium.

Ledit support d'électrode est avantageusement une mousse de nickel.

La pâte contenant la matière active contient aussi un premier liant à base de polytétrafluoroéthylène (PTFE) et un deuxième liant choisi parmi la carboxyméthylcellulose (CMC), l'hydroxypropylméthylcellulose (HPMC), l'hydroxyéthylcellulose (HEC) , l'hydroxypropylcellulose (HPC), le polyfluorure de vinylidène (PVDF), le styrene butadiene rubber (SBR).

D'autres caractéristiques et avantages de la présente invention apparaîtront au cours de la description suivante de modes de réalisation donnés à titre illustratif, mais nullement limitatif.

### Exemple 1 (comparatif) :

**1i)** Une poudre d'hydroxyde de cobalt standard Co(OH)₂ est préparée de la manière suivante.
   Dans un réacteur de précipitation maintenu à une température constante de 50°C, on introduit 0,5 litre d'une solution aqueuse à une concentration de 1M de sulfate de cobalt. La synthèse est réalisée sous atmosphère inerte dans le but d'éviter tout contact avec l'oxygène, afin de pallier aux risques d'oxydation de l'hydroxyde de cobalt à réaliser. On y ajoute 650 g d'une solution de soude caustique à une concentration de 2M selon un débit constant et continu pendant 30 minutes. Lorsque l'ajout de soude est terminé, la solution est maintenue sous agitation et chauffage constants pendant 2 heures afin de réaliser un mûrissement des particules d'hydroxyde. Le précipité obtenu est alors filtré et lavé à température ambiante par de l'eau distillée sous atmosphère inerte. Le produit obtenu est ensuite séché sous vide pendant 24 heures à une température de 70°C, après un balayage de l'étuve par un gaz inerte. Le précipité obtenu est ensuite broyé sous atmosphère inerte à la granulométrie adéquate.
   **1ii)** Avec la poudre d'hydroxyde de cobalt précédente des électrodes "test" de cobalt "**a**" sont réalisées en utilisant une pâte dont la composition exprimée en pourcentage pondéral par rapport au poids de la pâte est approximativement la suivante :
      - poudre d'hydroxyde de cobalt: 22%,
      - eau 76,2%
      - CMC : 0,3%
      - PTFE : 1,5%

La pâte ainsi obtenue est introduite dans une mousse de nickel de porosité environ 95%. L'ensemble est séché puis laminé pour obtenir des électrodes "**a**".
**1iii)** On assemble des accumulateurs cobalt-cadmium Co-Cd comportant les électrodes "**a**". Chaque électrode positive est accolée à deux électrodes négatives surcapacitives au cadmium. Les électrodes positives et négatives sont séparées par une couche de polypropylène non-tissé. Le faisceau est alors imprégné d'un électrolyte alcalin qui est une solution aqueuse de potasse KOH- 7,4N, de lithine LiOH-0,5N et de soude caustique NaOH-0,4N. On obtient les accumulateurs **Aa**.

### Exemple 2 (comparatif) :

**2i)** On utilise de l'oxyde de cobalt standard CoO.
**2ii)** Des électrodes "tests" de cobalt "**b**" sont réalisées comme dans l'exemple 1ii) en utilisant une pâte dont la composition exprimée en pourcentage pondéral par rapport au poids de la pâte est approximativement la suivante :
   - poudre d'oxyde de cobalt : 45%,
   - eau 53,2%
   - CMC : 0,3%
   - PTFE : 1,5%
**2iii)** On assemble des accumulateurs cobalt-cadmium Co-Cd comportant les électrodes "b", de la même manière que dans l'exemple 1 iii). On obtient les accumulateurs **Ab**.

### Exemple 3 :

**3i)** Une poudre d'hydroxyde de cobalt contenant 10% d'hydroxyde de nickel est préparée selon le procédé décrit dans l'exemple 1i) en utilisant un mélange d'une solution de sulfate de cobalt 0,98M et de sulfate de nickel 0,02M. On obtient un hydroxyde mixte de formule Ni_{0,02}Co_{0,98}(OH)₂. Cet hydroxyde mixte est mis en suspension dans une solution contenant en excès une solution d'hypochlorite de sodium à 48° pendant 2 heures à 20°C. Le produit est lavé avec de l'eau désionisée et séché à 70°C. Le composé obtenu est un oxyhydroxyde mixte de formule Ni_{0,02}Co_{0,98}OOH. Cet oxyhydroxyde mixte est alors mis en suspension dans une solution de LiOH 5M à 90°C pendant 72h. Le produit est lavé avec de l'eau désionisée et séché à 70°C. Le produit obtenu est un oxyde lithié de nickel de formule LiₓNi₀,₀₂Co_{0,98}O₂. Par analyse spectroscopique, on constate que x est égal à 1 ; le diamètre du composé obtenu, mesuré par granulométrie laser, est de 0, 3 µm.
**3ii)** Avec la poudre précédente des électrodes "tests" "**c**" sont réalisées comme dans l'exemple 1ii) avec en utilisant une pâte dont la composition exprimée en pourcentage pondéral par rapport au poids de la pâte est approximativement la suivante :
   - poudre d'oxyde lithié de nickel et de cobalt : 22%,
   - eau 76,2%
   - CMC : 0,3%
   - PTFE : 1,5%
**3iii)** On assemble des accumulateurs comportant les électrodes "**c**" comme dans l'exemple 1iii). On obtient les accumulateurs **Ac**.

### Exemple 4 :

**4i)** Une poudre d'hydroxyde de nickel contenant 50% d'hydroxyde de cobalt est préparée selon le procédé décrit dans l'exemple 1i) en utilisant un mélange d'une solution de sulfate de cobalt 0,5M et de sulfate de nickel 0,5M. On obtient un hydroxyde mixte de formule Ni_{0,5}Co_{0,5}(OH)₂. Cet hydroxyde mixte est mis en suspension dans une solution contenant en excès une solution d'hypochlorite de sodium à 48° pendant 2 heures à 20°C. Le produit est lavé avec de l'eau désionisée et séché à 70°C. Le composé obtenu est un oxyhydroxyde mixte de formule Ni_{0,5}Co_{0,5}OOH. Cet oxyhydroxyde mixte est alors mis en suspension dans une solution de LiOH 5M à 90°C pendant 72h. Le produit est lavé avec de l'eau désionisée et séché à 70°C. Le produit obtenu est un oxyde lithié de nickel de formule LiₓNi_{0,5}Co_{0,5}O₂. Par analyse spectroscopique, on constate que x est égal à 1 ; le diamètre moyen du composé obtenu, mesuré par granulométrie laser, est de 0.3 µm.
**4ii)** avec la poudre précédente, des électrodes "tests" "**d**" sont réalisées comme dans l'exemple 1ii) en utilisant une pâte dont la composition exprimée en pourcentage pondéral par rapport au poids de la pâte est approximativement la suivante:
   - poudre d'oxyde lithié de nickel et de cobalt : 45 %,
   - eau 53,2%
   - CMC : 0,3%
   - PTFE : 1,5%
**4iii)** On assemble des accumulateurs comportant les électrodes "**d**", comme dans l'exemple 1iii). On obtient les accumulateurs **Ad.**

### Exemple 5 :

**5i)** Une poudre d'hydroxyde de nickel contenant 10% d'hydroxyde de cobalt est préparée selon le procédé dans l'exemple 1i) en utilisant un mélange d'une solution de sulfate de cobalt 0,1M et de sulfate de nickel 0,9M. On obtient un hydroxyde mixte de formule Ni_{0,9}Co_{0,1}(OH)₂. Cet hydroxyde mixte est mis en suspension dans une solution contenant en excès une solution d'hypochlorite de sodium à 48° pendant 2 heures à 20°C. Le produit est lavé avec de l'eau désionisée et séché à 70°C. Le composé obtenu est un oxyhydroxyde mixte de formule Ni_{0,9}Co_{0,1}OOH. Cet oxyhydroxyde mixte est alors mis en suspension dans une solution de LiOH 5M à 90°C pendant 72h. Le produit est lavé avec de l'eau désionisée et séché à 70°C. Le produit obtenu est un oxyde lithié de nickel de formule LᵢₓNi_{0,9}Co_{0,1}O₂. Par analyse spectroscopique, on constate que x est égal à 0.98 ; le diamètre du composé obtenu, mesuré par granulométrie laser, est de 0,35 µm.
**5ii)** Avec la poudre précédente des électrodes "tests" "**e**" sont réalisées comme dans l'exemple 1ii), en utilisant une pâte dont la composition exprimée en pourcentage pondéral par rapport au poids de la pâte est approximativement la suivante :
   - poudre d'oxyde lithié de nickel et de cobalt : 45%,
   - eau 53,2%
   - CMC : 0,3%
   - PTFE : 1,5%
**5iii)** On assemble des accumulateurs comportant les électrodes "**e**", comme dans l'exemple 1iii). On obtient les accumulateurs **Ae**.

### Exemple 6 (comparatif):

**6i)** Une poudre d'hydroxyde de nickel est préparée selon le procédé décrit dans l'exemple 1i) en utilisant une solution de sulfate de nickel 1M. On obtient un hydroxyde de formule Ni(OH)₂. Cet hydroxyde est mis en suspension dans une solution contenant en excès une solution d'hypochlorite de sodium à 48° pendant 2 heures à 20°C. Le produit est lavé avec de l'eau désionisée et séché à 70°C. Le composé obtenu est un oxyhydroxyde de formule NiOOH. Cet oxyhydroxyde est alors mis en suspension dans une solution de LiOH 5M à 90°C pendant 72h. Le produit est lavé avec de l'eau désionisée et séché à 70°C. Le produit obtenu est un oxyde lithié de nickel de formule LiₓNiO_{2.} Par analyse spectroscopique, on constate que x est égal à 0.95 ; le diamètre du composé obtenu, mesuré par granulométrie laser, est de 0.25 µm.
**6ii)** Avec la poudre précédente, des électrodes "tests" "**f**" sont réalisées comme dans l'exemple 1 ii) en utilisant une pâte dont la composition exprimée en pourcentage pondéral par rapport au poids de la pâte est approximativement la suivante :
   - poudre d'oxyde lithié de nickel : 45%,
   - eau 53,2%
   - CMC : 0,3%
   - PTFE : 1,5%
**6iii)** On assemble des accumulateurs comportant les électrodes "**f**", comme dans l'exemple 1iii). On obtient les accumulateurs **Af**.

### Exemple 7 (comparatif):

**7i)** Une poudre d'hydroxyde de cobalt est préparée selon le procédé décrit dans l'exemple 1i) en utilisant une solution de sulfate de cobalt 1M. On obtient un hydroxyde de formule Co(OH)₂. Cet hydroxyde est mis en suspension dans une solution contenant en excès une solution d'hypochlorite de sodium à 48° pendant 2 heures à 20°C. Le produit est lavé avec de l'eau désionisée et séché à 70°C. Le composé obtenu est un oxyhydroxyde de formule CoOOH. Cet oxyhydroxyde est alors mis en suspension dans une solution de LiOH 5M à 90°C pendant 72h. Le produit est lavé avec de l'eau désionisée et séché à 70°C. Le produit obtenu est un oxyde lithié de cobalt de formule LiₓCoO₂. Par analyse spectroscopique, on constate que x est égal à 1 ; le diamètre du composé obtenu, mesuré par granulométrie laser, est de 0.3 µm.
**7ii)** Avec la poudre précédente, des électrodes "tests" "**g**" sont réalisées comme dans l'exemple 1ii) en utilisant une pâte dont la composition exprimée en pourcentage pondéral par rapport au poids de la pâte est approximativement la suivante :
   - poudre d'oxyde lithié de cobalt : 45%,
   - eau 53,2%
   - CMC : 0,3%
   - PTFE : 1,5%
**7iii)** On assemble des accumulateurs comportant les électrodes "**g**", comme dans l'exemple 1iii). On obtient les accumulateurs **Ag**.

### Exemple 8 :

**8i)** Une poudre d'hydroxyde de nickel contenant 50% d'hydroxyde de cobalt est préparée selon le procédé décrit dans l'exemple 1i) en utilisant un mélange d'une solution de sulfate de cobalt 0,5M et de sulfate de nickel 0,5M. On obtient un hydroxyde mixte de formule Ni_{0,5}Co_{0,5}(OH)₂. Cet hydroxyde mixte est mis en suspension dans une solution contenant en excès une solution d'hypochlorite de sodium à 48° mélangé à de la soude NaOH 1M en rapport 1:1 pendant 2 heure à 20°C. Le produit est lavé avec de l'eau désionisée et séché à 70°C. Le composé obtenu est un oxyhydroxyde mixte de formule Ni_{0,5}Co_{0,5}OOH contenant des cations sodium. Cet oxyhydroxyde mixte est alors mis en suspension dans une solution de LiOH 5M à 90°C pendant 72h. Le produit est lavé avec de l'eau désionisée et séché à 70°C. Le produit obtenu est un oxyde lithié de formule LiₓNa_{y}Ni_{0,5}Co_{0,5}O₂. Par analyse spectroscopique, on constate que x est égal à 0.97 ; le diamètre du composé obtenu, mesuré par granulométrie laser, est de 0.4 µm.
**8ii)** Des électrodes "tests" "**h**" sont réalisées comme dans l'exemple 1 ii) en utilisant une pâte dont la composition exprimée en pourcentage pondéral par rapport au poids de la pâte est approximativement la suivante :
   - la poudre d'oxyde lithié : 45%,
   - eau 53,2%
   - CMC : 0,3%
   - PTFE : 1,5%
**8iii)** On assemble des accumulateurs comportant les électrodes "**h**", comme dans l'exemple 1iii). On obtient les accumulateurs **Ah**.

Pour caractériser la résistance au stockage des différents réseaux conducteurs, on teste les accumulateurs **Aa** à **Ah** dans les conditions suivantes, après un repos de 48 heures :
- Cycle 1 :
   - Charge à 0,025 lc pendant 60 heures, où Ic est le courant nécessaire pour décharger la capacité nominale d'un accumulateur en 1 heure ;
   - Décharge à 0,1 Ic jusqu'à une tension d'arrêt de 0,6 volt ;
- Cycles 2 à 10 :
   - Charge à 0,2 lc pendant 6 heures à 20°C ;
   - Décharge à 0,2 Ic jusqu'à une tension d'arrêt de 0,6 volt ;

Un accumulateur par série est démonté. On mesure la conductivité électronique et le degré d'oxydation du composé pulvérulent des électrodes positives.

Les accumulateurs restants sont alors stockés à l'état déchargé à température ambiante pendant 6 mois .

Un accumulateur par série est démonté. On mesure le degré d'oxydation du composé pulvérulent des électrodes positives. Les résultats obtenus sont regroupés dans le tableau 1.

**Tableau 1**

| Accumulateur | Composés Initiaux | Degré d'oxydation avant stockage | Conductivité avant stockage S.Cm⁻¹ | Degré d'oxydation; après stockage |
|---|---|---|---|---|
| Aa | Co(OH)₂ | 3,05 | 6 10⁻² | 2,3 |
| Ab | CoO | 3,12 | 4 10⁻¹ | 2,3 |
| Ac | LiₓNi_{0,02}Co_{0,98}O₂ | 3,51 | 6 10⁻¹ | 3,31 |
| Ad | LiₓNi_{0,5}Co_{0,5}O₂ | 3,53 | 5 10⁻¹ | 3,35 |
| Ae | LiₓNi_{0,9}Co_{0,1}O₂ | 3,48 | 3 10⁻¹ | 3,42 |
| Af | LiₓNiO₂ | 3,50 | 3 10⁻³ | 3,45 |
| Ag | LiₓCoO₂ | 3,52 | 6 10⁻¹ | 3,00 |
| Ah | LiₓNa_{y}Ni_{0,5}Co_{0,5}O₂ | 3,55 | 8 10⁻¹ | 3.35 |

On comprend d'après ces résultats, que les composés Co(OH)₂ et CoO ne sont pas stables durant la phase de stockage et subissent une réduction préjudiciable au réseau conducteur.

Par contre, l'oxyde lithié de nickel et de cobalt des accumulateurs **Ac, Ad, Ae, Ah** selon l'invention est un composé conducteur dont le degré d'oxydation évolue peu pendant la période de stockage.
Lorsque la quantité de nickel dans l'oxyde lithié devient supérieure à 0.9, la conductivité du matériau devient cent fois plus faible.
Lorsque la quantité de nickel dans l'oxyde lithié devient inférieure à 0.02, le degré d'oxydation du matériau après stockage est beaucoup plus faible que dans le cas des autres oxydes lithiés, ce qui signifie que ce matériau est moins stable lors du stockage.
Pour l'oxyde lithié de nickel et de cobalt représenté par la formule LiₓNi_{y}Co_{1-y}O₂, la quantité de nickel est donc comprise de préférence entre 0.02 et 0,9.

Dans un deuxième temps, les oxydes lithiés de nickel et de cobalt selon l'invention ainsi que des matériaux conducteurs comparatifs sont testés comme additifs conducteurs sous forme de poudres dans des électrodes positives d'accumulateurs nickel-hydrure métallique Ni-MH étanches.

### Exemple 9 (comparatif) :

Des électrodes de nickel standard "**i**" sont réalisées en utilisant une pâte dont la composition exprimée en pourcentage pondéral par rapport au poids de la pâte est approximativement la suivante :
- poudre d'hydroxyde dont le diamètre moyen est de 12 µm, composé majoritairement de nickel Ni(OH)₂, contenant environ 3.5% d'hydroxyde de cobalt syncristallisé et environ 5% d'hydroxyde de zinc syncristallisé : 66%,
- hydroxyde de cobalt Co(OH)₂ : 7,2%
- eau 25%
- CMC : 0,3%
- PTFE : 1,5%

La pâte ainsi obtenue est introduite dans une mousse de nickel de porosité environ 95%. L'ensemble est séché puis laminé pour obtenir des électrodes "**i**".

On assemble des accumulateurs nickel-hydrure métallique Ni-MH étanches comportant les électrodes "**i**" . Chaque électrode positive est accolée à une électrode négative surcapacitive à alliage hydrurable de type connu. Les électrodes positives et négatives sont séparées par une couche de polypropylène non-tissé et spiralées. Le faisceau est alors inséré dans un godet métallique et imprégné d'un électrolyte alcalin qui est une solution aqueuse de potasse KOH 7,4N, de lithine LiOH 0,5N et de soude caustique NaOH 0,4N. On obtient les accumulateurs **Bi**.

### Exemple 10 (comparatif) :

Des électrodes de nickel standard "**j**" sont réalisées en utilisant une pâte dont la composition exprimée en pourcentage pondéral par rapport au poids de la pâte est approximativement la suivante :
- poudre d'hydroxyde dont le diamètre moyen est de 12 µm, composé majoritairement de nickel Ni(OH)₂, contenant environ 3.5% d'hydroxyde de cobalt syncristallisé et environ 5% d'hydroxyde de zinc syncristallisé : 66%,
- oxyde de cobalt CoO : 6%
- eau 26,2%
- CMC : 0,3%
- PTFE : 1,5%

La pâte ainsi obtenue est introduite dans une mousse de nickel de porosité environ 95%. L'ensemble est séché puis laminé pour obtenir des électrodes "**j**".

On assemble des accumulateurs nickel-hydrure métallique Ni-MH étanches comportant les électrodes "**j**" comme dans l'exemple 9. On obtient les accumulateurs **Bj**.

### Exemple 11:

On utilise le composé LiNi_{0.5}Co_{0.5}O₂ obtenu dans l'exemple 4i).

Des électrodes de nickel "**k**" sont réalisées en utilisant une pâte dont la composition exprimée en pourcentage pondéral par rapport au poids de la pâte est approximativement la suivante :
- poudre d'hydroxyde dont le diamètre moyen est de 12 µm, composé majoritairement de nickel, contenant environ 3.5% d'hydroxyde de cobalt syncristallisé et environ 5% d'hydroxyde de zinc syncristallisé : 66%,
- oxyde lithié de nickel et de cobalt LiNi_{0,5}Co_{0,5}O₂ : 7,2%
- eau 25%
- CMC : 0,3%
- PTFE : 1,5%

La quantité d'oxyde lithié de nickel est donc de 10,9% par rapport à l'hydroxyde de nickel.

La pâte ainsi obtenue est introduite dans une mousse de nickel de porosité environ 95%. L'ensemble est séché puis laminé pour obtenir des électrodes "**k**".

On assemble des accumulateurs nickel-hydrure métallique Ni-MH étanches comportant les électrodes "**k**" comme dans l'exemple 9. On obtient les accumulateurs **Bk**.

### Exemple 12 :

Des électrodes de nickel "**l**", "**m**", "**n**", "**o**" sont réalisées en utilisant une pâte dont la composition exprimée en pourcentage pondéral par rapport au poids de la pâte est approximativement la suivante :
- de l'oxyde lithié de nickel LiNi_{0,5}Co_{0,5}O₂ réalisé dans les mêmes conditions que l'exemple 1 avec :
   - 2,6% pour les électrodes "**l**";
   - 4.0% pour les électrodes "**m**";
   - 7,9% pour les électrodes "**n**";
   - 10% pour les électrodes "**o**" ;
- une poudre d'hydroxyde dont le diamètre moyen est de 12 µm, composé majoritairement de nickel Ni(OH)₂, contenant environ 3.5% d'hydroxyde de cobalt syncristallisé et environ 5% d'hydroxyde de zinc syncristallisé : 73,2% moins la quantité d'oxyde lithié de nickel,
- eau 25%
- CMC : 0,3%
- PTFE : 1,5%

Les quantités d'oxyde lithié de nickel sont donc respectivement de 3,9%, 6,1%, 12,0%, 15,2% pour les électrodes "**l**", "**m**", "**n**", "**o**", comme dans l'exemple 9. On obtient les accumulateurs **Bl**, **Bm**, **Bn**, **Bo.**

### Exemple 13 :

Une poudre d'hydroxyde de nickel contenant 50% d'hydroxyde de cobalt est préparée en utilisant un mélange d'une solution de sulfate de cobalt 0,5M et de sulfate de nickel 0,5M, comme dans le procédé des exemples 1i) et 4i), sauf pour ce qui est de la température de synthèse qui est ici de 90°C. Le produit obtenu est un oxyde lithié de nickel de formule LiₓNi_{0,5}Co_{0,5}O₂ avec un diamètre moyen du composé, mesuré par granulométrie laser, égal à 0.6 µm. Par analyse spectroscopique, on constate que la quantité de lithium x dans le composé est égale à 1.

Des électrodes de nickel "**q**" sont réalisées en utilisant une pâte dont la composition exprimée en pourcentage pondéral par rapport au poids de la pâte est approximativement la suivante :
- poudre d'hydroxyde dont le diamètre moyen est de 12 µm, composé majoritairement de nickel Ni(OH)₂, contenant environ 3.5% d'hydroxyde de cobalt syncristallisé et environ 5% d'hydroxyde de zinc syncristallisé : 66%,
- oxyde lithié de nickel LiNi_{0,5}Co_{0,5}O₂ : 7,2%
- eau 25%
- CMC : 0,3%
- PTFE : 1,5%

La quantité d'oxyde lithié de nickel est donc de 10,9% par rapport à l'hydroxyde de nickel.

La pâte ainsi obtenue est introduite dans une mousse de nickel de porosité environ 95%. L'ensemble est séché puis laminé pour obtenir des électrodes "**q**".

On assemble des accumulateurs nickel-hydrure métallique Ni-MH étanches comportant les électrodes "q", comme dans l'exemple 9. On obtient les accumulateurs **Bq**.

Pour caractériser la résistance au stockage des différents réseaux conducteurs, on teste les accumulateurs dans les conditions suivantes :
- Cycle 1 :
   - Charge à 0,1 Ic pendant 16 heures à 20°C, où Ic est le courant nécessaire pour décharger la capacité nominale d'un accumulateur en 1 heure ;
   - Décharge à 0,2 Ic jusqu'à une tension d'arrêt de 1 volt ;
- Cycles 2 et 3 :
   - Charge à Ic pendant 1,2 heures à 20°C;
   - Décharge à Ic jusqu'à une tension d'arrêt de 1 volt.

Les accumulateurs sont alors stockés à l'état déchargé à température ambiante. Au bout d'environ deux mois, on observe que la tension de l'accumulateur est devenu inférieure à la tension de stabilité de l'oxyhydroxyde de cobalt (1,05V).

Après 6 mois de stockage, on effectue une mesure de capacité restante dans les conditions suivantes.
- Cycles 4 à 9 :
   - Charge à Ic pendant 1,2h à 20°C,
   - Décharge à Ic jusqu'à 1 volt.

Les capacités massiques rapportées au poids du mélange de l'hydroxyde à base de nickel et des composés conducteurs à base d'oxyde lithié sont regroupées dans le tableau 2.

**Tableau 2**

| SERIE Bi | Bi | Bj | Bk | Bl | Bm | Bn | Bo | Bq |
|---|---|---|---|---|---|---|---|---|
| Composés initiaux | Co(OH)₂ | CoO | LiₓNi_{0.5}CO_{0.5}O₂ | | | | | |
| Granulométrie Moyenne | | | 0.3 µm | 0.3 µm | 0.3 µm | 0.3 µm | 0.3 µm | 0.6 µm |
| % poids | | | 109% | 39% | 6.1 % | 12% | 15.2% | 10.9% |
| Rendement de l'électrode au cycle 3 (mAh/g) | 225 | 240 | 241 | 221 | 236 | 240 | 230 | 230 |
| Rendement de l'électrode au cycle 9 (mAh/g) | 193 | 192 | 240 | 221 | 236 | 240 | 229 | 228 |

On comprend d'après ces résultats que les accumulateurs standard **Bi** et **Bj** présentent des pertes de capacités importantes en stockage. Pour les accumulateurs **Bk** à **Bq**, les pertes de capacités en stockage sont pratiquement nulles.

Dans le cas de l'accumulateur **Bl**, la quantité de composé conducteur selon l'invention ajoutée dans l'électrode est trop faible, l'électrode n'est pas assez conductrice et le rendement de l'électrode est faible.
De plus, dans le cas de l'accumulateur **Bo**, la quantité de composé conducteur selon l'invention ajoutée dans l'électrode est trop importante, et le rendement de la matière active seule n'augmente pas. De ce fait, le rendement de l'électrode chute. La quantité d'oxyde de nickel-cobalt lithié ajoutée sous forme de poudre est donc de préférence comprise entre 6 et 12%, exprimée en poids par rapport au matériau actif.

Les résultats des éléments **Bq** démontrent que, bien que la quantité d'oxyde lithié soit suffisante, la granulométrie du composé est trop élevée et ne permet d'obtenir un rendement optimal de la matière. L'oxyde lithié de nickel et de cobalt doit présenter de préférence des particules dont le diamètre moyen est inférieur à 0.5 µm

Dans un troisième temps, les oxydes lithiés de nickel et de cobalt selon l'invention ainsi que des matériaux conducteurs comparatifs sont testés comme additifs conducteurs sous forme de revêtement des grains d'hydroxyde de nickel dans des électrodes positives d'accumulateurs Ni-MH.

### Exemple 14 (comparatif) :

Une poudre d'hydroxyde de nickel dont les grains sont revêtus par de l'hydroxyde de cobalt est réalisée dans les conditions suivantes.

Une poudre d'hydroxyde de nickel composée majoritairement de nickel, contenant environ 3.5% d'hydroxyde de cobalt syncristallisé et environ 5% d'hydroxyde de zinc syncristallisé est mise en suspension dans une solution de sulfate de cobalt de concentration 4M à 70°C. Une solution d'hydroxyde de sodium est rajoutée lentement pour conserver un pH de la solution entre 9 et 11. La poudre obtenue est alors lavée, séchée. On obtient une poudre d'hydroxyde de nickel munie d'un revêtement d'hydroxyde de cobalt. La quantité d'hydroxyde de cobalt déposée sur la poudre d'hydroxyde de nickel est de 6%.

Des électrodes de nickel "**r**" sont réalisées en utilisant une pâte dont la composition exprimée en pourcentage pondéral par rapport au poids de la pâte est approximativement la suivante :
- poudre d'hydroxyde de nickel recouverte d'hydroxyde de cobalt : 73,2%,
- eau 25%
- CMC : 0,3%
- PTFE : 1,5%

La pâte ainsi obtenue est introduite dans une mousse de nickel de porosité environ 95%. L'ensemble est séché puis laminé pour obtenir des électrodes "**r**".

On assemble des accumulateurs nickel-hydrure métallique Ni-MH étanches comportant les électrodes "**r**", comme dans l'exemple 9. On obtient les accumulateurs **Br**.

### Exemple 15 :

Une poudre d'hydroxyde de nickel dont les grains sont revêtus par de l'oxyde lithié de nickel et de cobalt de formule LiₓNi_{0.05}Co₀.₉₅O₂ est réalisée dans les conditions suivantes.

Une poudre d'hydroxyde de nickel composée majoritairement de nickel, contenant environ 3.5% d'hydroxyde de cobalt syncristallisé et environ 5% d'hydroxyde de zinc syncristallisé est mise en suspension dans une solution de sulfate de cobalt de concentration 4M et de sulfate de nickel de concentration 0,2M à 70°C. Une solution d'hydroxyde de sodium est rajoutée lentement pour conserver un pH de la solution entre 9 et 11. La poudre obtenue est alors lavée, séchée. On obtient une poudre d'hydroxyde de nickel recouverte par un revêtement d'hydroxyde de nickel de composition Ni_{0,5}Co_{0,95}(OH)₂. Ladite poudre est alors mise en solution dans une solution de lithine LiOH 5N à 90°C pendant 24h en présence d'oxygène. Ladite poudre est alors lavée, séchée. On obtient une poudre d'hydroxyde de nickel recouverte par un revêtement d'oxyde lithié de nickel de composition LiₓNi_{0,05}Co_{0,95}O₂. Par analyse spectroscopique, on constate que x est égal à 0.95 ; le diamètre du composé obtenu, mesuré par granulométrie laser, est de 0,3 µm. La quantité d'oxyde lithié de nickel déposée sur la poudre d'hydroxyde de nickel est de 6%.

Des électrodes de nickel "**s**" sont réalisées en utilisant une pâte dont la composition exprimée en pourcentage pondéral par rapport au poids de la pâte est approximativement la suivante :
- poudre d'hydroxyde de nickel recouverte d'oxyde lithié de nickel et de cobalt : 73,2%,
- eau 25%
- CMC : 0,3%
- PTFE : 1,5%

La pâte ainsi obtenue est introduite dans une mousse de nickel de porosité environ 95%. L'ensemble est séché puis laminé pour obtenir des électrodes "**s**".

On assemble des accumulateurs nickel-hydrure métallique Ni-MH étanches comportant les électrodes "**s**", comme dans l'exemple 9. On obtient les accumulateurs **Bs**.

### Exemple 16 :

Des poudres d'hydroxyde de nickel dont les grains sont revêtus par de l'oxyde lithié de nickel Pt, Pu, Pv, Pw sont réalisées dans les conditions identiques à celles de l'exemple 15. Les quantités de sulfate de cobalt sont ajustées pour que la quantité d'oxyde lithié de nickel déposée sur la poudre d'hydroxyde de nickel soit de 1,5%, 3,5%, 8,5%, 15% respectivement pour les poudres Pt, Pu, Pv, Pw.

Des électrodes de nickel "**t**", "**u**", "**v**", "**w**" sont réalisées en utilisant une pâte dont la composition exprimée en pourcentage pondéral par rapport au poids de la pâte est approximativement la suivante :
- poudre d'hydroxyde de nickel recouverte d'oxyde lithié de cobalt et de nickel : 73,2%,
- eau 25%
- CMC : 0,3%
- PTFE : 1,5%

On assemble des accumulateurs nickel-hydrure métallique Ni-MH étanches comportant les électrodes "**t**", "**u**", "**v**", "**w**", Comme dans l'exemple 9. On obtient les accumulateurs **Bt, Bu, Bv, Bw**.

Pour caractériser la résistance au stockage des différents réseaux conducteurs, on teste les accumulateurs dans les conditions suivantes :
- Cycle 1 :
   - Charge à 0,1 Ic pendant 16 heures à 20°C, où Ic est le courant nécessaire pour décharger la capacité nominale d'un accumulateur en 1 heure ;
   - Décharge à 0,2 Ic jusqu'à une tension d'arrêt de 1 volt ;
- Cycles 2 et 3:
   - Charge à Ic pendant 1,2 heures à 20°C;
   - Décharge à Ic jusqu'à une tension d'arrêt de 1 volt ;

Les accumulateurs sont alors stockés à l'état déchargé à température ambiante. Au bout d'environ deux mois, on observe que la tension de l'accumulateur est devenu inférieure à la tension de stabilité de l'oxyhydroxyde de cobalt (1,05V).

Après 6 mois de stockage, on effectue une mesure de capacité restante dans les conditions suivantes.
- Cycles 4 à 9 :
   - Charge à Ic pendant 1,2h à 20°C
   - Décharge à Ic jusqu'à 1 volt.

Les capacités massiques rapportées au poids du mélange de l'hydroxyde à base de nickel et des composés conducteurs à base de cobalt sont regroupées dans le tableau 3.

**Tableau 3**

| SERIE | Br | Bs | Bt | Bu | Bv | Bw |
|---|---|---|---|---|---|---|
| Composés Initiaux | C_{O}(OH)₂ | LiₓNi_{0.05}Co_{0.95}O₂ | | | | |
| | | 6% | 1.5% | 3.5 % | 8.5% | 15% |
| Rendement de L'électrode au cycle 3 (mAh/g) | 252 | 251 | 210 | 248 | 252 | 235 |
| Rendement de l'électrode au cycle 9 (Moh/g) | 185 | 250 | 211 | 246 | 252 | 235 |

Les accumulateurs ne faisant pas partie de l'invention **Br** présentent des pertes de capacités importantes en stockage.

Pour les accumulateurs **Bs** à **Bw**, les pertes de capacités en stockage sont pratiquement nulles. Dans le cas de l'accumulateur **Bt**, la quantité de composé conducteur recouvrant l'hydroxyde de nickel est trop faible, l'électrode n'est pas assez conductrice et le rendement de l'électrode est faible. Dans le cas de l'accumulateur **Bw**, la quantité de composé conducteur recouvrant l'hydroxyde de nickel est trop importante, et le rendement de la matière active seule n'augmente pas. De ce fait, le rendement de l'électrode est faible. Lorsque le composé est ajouté sous forme d'un revêtement sur la poudre d'hydroxyde de nickel, la quantité d'oxyde lithié de nickel et de cobalt est donc de préférence comprise entre 3 et 9%, exprimée en poids par rapport au matériau actif.

Enfin, selon un autre mode de réalisation, l'oxyde lithié de nickel et de cobalt peut être utilisé selon l'invention dans l'électrode positive sous forme d'un mélange d'une poudre d'oxyde lithié et d'une poudre d'hydroxyde de nickel dont les grains sont recouverts d'oxyde lithié.

Bien entendu, l'invention n'est pas limitée aux exemples de réalisation qui viennent d'être décrits.

## Revendications

1. Electrode au nickel non frittée pour générateur électrochimique à électrolyte alcalin comportant un collecteur de courant et une pâte contenant une matière active à base d'hydroxyde de nickel et un matériau conducteur, **caractérisée par le fait que** ledit matériau conducteur est un oxyde lithié de cobalt et de nickel dont le degré d'oxydation obtenu après la formation électrochimique est stable après un stockage pendant six mois à température ambiante dans l'électrolyte alcalin.

2. Electrode au nickel selon la revendication 1, **caractérisée par le fait que** la conductivité dudit matériau conducteur après la formation électrochimique est supérieure à 10⁻² Siemens.cm⁻¹.

3. Electrode au nickel selon l'une des revendications 1 et 2, **caractérisée par le fait que** ledit oxyde lithié répond à la formule LiₓNi_{y}Co_{1-y}O₂ avec x compris entre 0.1 et 1 et y compris entre 0.02 et 0.9.

4. Electrode au nickel selon l'une des revendications 1 à 3, **caractérisée par le fait que** ledit oxyde lithié est sous forme de poudre mélangée à de la poudre d'hydroxyde de nickel.

5. Electrode au nickel selon l'une des revendications 1 à 3, **caractérisée par le fait que** ledit oxyde lithié recouvre les grains d'hydroxyde de nickel.

6. Electrode au nickel selon l'une des revendications 1 à 3, **caractérisée par le fait que** ledit oxyde lithié est à la fois sous forme de poudre mélangée à la poudre d'hydroxyde de nickel et sous forme de revêtement des grains d'hydroxyde de nickel.

7. Electrode au nickel selon l'une des revendications 1 à 4 et 6, **caractérisée par le fait que** les grains de poudre dudit oxyde lithié ont une granulométrie moyenne inférieure à 0.7 µm.

8. Electrode au nickel selon l'une des revendications 1 à 4 et 7, **caractérisée par le fait que** la quantité dudit oxyde lithié sous forme de poudre est comprise entre 6 et 12 % en poids par rapport à ladite matière active.

9. Electrode au nickel selon l'une des revendications 1 à 3 et 5, **caractérisée par le fait que** la quantité dudit oxyde lithié sous forme de revêtement des grains de la poudre d'hydroxyde de nickel est comprise entre 3 et 9 % en poids par rapport à ladite matière active.

10. Electrode au nickel selon l'une des revendications précédentes, **caractérisée par le fait que** ledit oxyde lithié contient du sodium.

11. Electrode au nickel selon la revendication 10, **caractérisée par le fait que** ledit oxyde lithié répond à la formule LiₓNa_{z}Ni_{y}Co_{1-y}O₂ avec x + z compris entre 0.1 et 1 et z compris entre 0 et 0.5.

12. Electrode au nickel selon l'une des revendications précédentes, **caractérisée par le fait que** ledit hydroxyde de nickel contient du nickel, et au moins un hydroxyde syncristallisé d'un élément choisi parmi le zinc, le cadmium, le magnésium et l'aluminium.

13. Electrode au nickel selon la revendication 12, **caractérisée par le fait que** ledit hydroxyde de nickel contient en outre au moins un hydroxyde syncristallisé d'un élément choisi parmi le cobalt, le manganèse, l'yttrium, le calcium et le zirconium.

14. Electrode selon l'une des revendications précédentes, **caractérisée par le fait que** ledit collecteur de courant est une mousse de nickel.

15. Electrode selon l'une des revendications précédentes, **caractérisée par le fait que** ladite pâte contient en outre un premier liant à base de polytétrafluoroéthylène (PTFE) et un deuxième liant choisi parmi la carboxyméthylcellulose (CMC), l'hydroxypropylméthylcellulose (HPMC), l'hydroxyethylcellulose (HEC), l'hydroxypropylcellulose (HPC), le polyfluorure de vinylidène (PVDF), le styrene butadiene rubber (SBR).

## Claims

1. A non-sintered nickel electrode for alkaline electrolyte storage cells including a current collector and a paste containing an active material based on nickel hydroxide and a conductive material, **characterized in that** said conductive material is a lithium-containing cobalt and nickel oxide whose degree of oxidation obtained after electrochemical conditioning is stable during six-months storage in the alkaline electrolyte.

2. A nickel electrode according to claim 1, **characterized in that** the conductivity of said conductive material after electrochemical conditioning is greater than 10⁻² Siemens.cm⁻¹.

3. A nickel electrode according to claim 1 or 2, **characterized in that** said lithium-containing oxide has the formula LiₓNi_{y}Co_{1-y}O₂ with x in the range from 0.1 to 1 and y in the range from 0.02 to 0.9.

4. A nickel electrode according to one of claims 1 to 3, **characterized in that** said lithium-containing oxide is in the form of powder mixed with the nickel hydroxide powder.

5. A nickel electrode according to one of claims 1 to 3, **characterized in that** said lithium-containing oxide coats the nickel hydroxide grains.

6. A nickel electrode according to one of claims 1 to 3, **characterized in that** said lithium-containing oxide is both in the form of powder mixed with the nickel hydroxide powder and in the form of a coating on the nickel hydroxide grains.

7. A nickel electrode according to one of claims 1 to 4 and 6, **characterized in that** the grains of said lithium-containing oxide powder have a mean particle size less than 0.7 µm.

8. A nickel electrode according to one of claims 1 to 4 and 7, **characterized in that** the quantity of said lithium-containing oxide in the form of powder relative to said active material is in the range from 6% to 12% by weight.

9. A nickel electrode according to one of claims 1 to 3 and 5, **characterized in that** the quantity of said lithium-containing oxide in the form of coating on the nickel hydroxide powder grains relative to said active material is in the range from 3% to 9% by weight.

10. A nickel electrode according to one of the preceding claims, **characterized in that** said lithium-containing oxide contains sodium.

11. A nickel electrode according to claim 10, **characterized in that** said lithium-containing oxide has the formula LiₓNa_{z}Ni_{y}Co_{1-y}O₂ with x + z in the range from 0.1 to 1 and z in the range from 0 to 0.5.

12. A nickel electrode according to one of the preceding claims, **characterized in that** said nickel hydroxide contains nickel and at least one syncrystallized hydroxide of an element chosen from zinc, cadmium, magnesium and aluminum.

13. A nickel electrode according to claim 12, **characterized in that** said nickel hydroxide further includes at least one syncrystallized hydroxide of an element chosen from cobalt, manganese, yttrium, calcium and zirconium.

14. An electrode according to one of the preceding claims, **characterized in that** said current collector is nickel foam.

15. An electrode according to one of the preceding claims, **characterized in that** said paste further includes a first binder based on polytetrafluoroethylene (PTFE) and a second binder chosen from carboxymethyl cellulose (CMC), hydroxypropylmethyl cellulose (HPMC), hydroxyethyl cellulose (HEC), hydroxypropyl cellulose (HPC), polyvinylidene fluoride (PVDF) and styrene butadiene rubber (SBR).

## Patentansprüche

1. Ungesinterte Nickelelektrode für einen elektrochemischen Stromerzeuger mit alkalischem Elektrolyten, die einen Stromsammler und eine Masse, die eine aktive Substanz auf der Basis von Nickelhydroxid und ein leitfähiges Material enthält, aufweist, **dadurch gekennzeichnet, daß** das leitfähige Material ein lithiumhaltiges Oxid von Kobalt und Nickel ist, dessen nach der elektrochemischen Bildung erhaltene Oxidationsstufe nach einer 6-monatigen Aufbewahrung bei Umgebungstemperatur in dem alkalischen Elektrolyten stabil ist.

2. Nickelelektrode nach Anspruch 1, **dadurch gekennzeichnet, daß** die Leitfähigkeit des leitfähigen Materials nach der elektrochemischen Bildung größer als 10⁻² Siemens cm⁻¹ ist.

3. Nickelelektrode nach einem der Ansprüche 1 und 2, **dadurch gekennzeichnet, daß** das lithiumhaltige Oxid der Formel LiₓNi_{y}CO₁-_{y}O₂ entspricht, wobei x zwischen 0,1 und 1 liegt und y zwischen 0,02 und 0,9 liegt.

4. Nickelelektrode nach einem der Ansprüche 1 bis 3, **dadurch gekennzeichnet, daß** sich das lithiumhaltige Oxid in der Form von Pulver, das einem Nickelhydroxid-Pulver beigemischt ist, befindet.

5. Nickelelektrode nach einem der Ansprüche 1 bis 3, **dadurch gekennzeichnet, daß** das lithiumhaltige Oxid die Nickelhydroxid-Körner bedeckt.

6. Nickelelektrode nach einem der Ansprüche 1 bis 3, **dadurch gekennzeichnet, daß** sich das lithiumhaltige Oxid gleichzeitig in der Form von Pulver, das dem Nickelhydroxid-Pulver beigemischt ist, und in der Form einer Beschichtung der Nickelhydroxid-Körner befindet.

7. Nickelelektrode nach einem der Ansprüche 1 bis 4 und 6, **dadurch gekennzeichnet, daß** die Körner des Pulvers des lithiumhaltigen Oxids eine mittlere Kornklassierung von kleiner als 0,7 µm haben.

8. Nickelelektrode nach einem der Ansprüche 1 bis 4 und 7, **dadurch gekennzeichnet, daß** die Menge des lithiumhaltigen Oxids in der Form von Pulver zwischen 6 und 12 Gew.-%, bezogen auf die aktive Substanz, liegt.

9. Nickelelektrode nach einem der Ansprüche 1 bis 3 und 5, **dadurch gekennzeichnet, daß** die Menge des lithiumhaltigen Oxids in der Form einer Beschichtung der Körner des Nickelhydroxid-Pulvers zwischen 3 und 9 Gew.-%, bezogen auf die aktive Substanz, liegt.

10. Nickelelektrode nach einem der vorhergehenden Ansprüche, **dadurch gekennzeichnet, daß** das lithiumhaltige Oxid Natrium enthält.

11. Nickelelektrode nach Anspruch 10, **dadurch gekennzeichnet, daß** das lithiumhaltige Oxid der Formel LiₓNa_{z}Ni_{y}Co_{1-y}O₂ entspricht, wobei x + z zwischen 0,1 und 1 liegt und z zwischen 0 und 0,5 liegt.

12. Nickelelektrode nach einem der vorhergehenden Ansprüche, **dadurch gekennzeichnet, daß** das Nickelhydroxid Nickel und mindestens ein cokristallisiertes Hydroxid eines Elements, das aus Zink, Cadmium, Magnesium und Aluminium ausgewählt ist, enthält.

13. Nickelelektrode nach Anspruch 12, **dadurch gekennzeichnet, daß** das Nickelhydroxid außerdem mindestens ein cokristallisiertes Hydroxid eines Elements, das aus Kobalt, Mangan, Yttrium, Calcium und Zirconium ausgewählt ist, enthält.

14. Elektrode nach einem der vorhergehenden Ansprüche, **dadurch gekennzeichnet, daß** der Stromsammler ein Nickelschwamm ist.

15. Elektrode nach einem der vorhergehenden Ansprüche, **dadurch gekennzeichnet, daß** die Masse außerdem ein erstes Bindemittel auf der Basis von Polytetrafluorethylen (PTFE) und ein zweites Bindemittel, das ausgewählt ist aus Carboxymethylcellulose (CMC), Hydroxypropylmethylcellulose (HPMC), Hydroxyethylcellulose (HEC), Hydroxypropylcellulose (HPC), Polyvinylidenfluorid (PVDF), Styrol-Butadien-Kautschuk (SBR), enthält.
